# EUROPÄISCHE PATENTANMELDUNG

(11) **EP 4 491 991 A1**
(43) Veröffentlichungstag der Anmeldung: **15.01.2025**
(21) Anmeldenummer: 23185133.8
(22) Anmeldetag: 12.07.2023
(51) Int. Cl.: F27B 17/02, A61C 13/20, F27D 19/00, F27D 21/02

(54) **WÄRMEBEHANDLUNGSOFEN FÜR EINE DENTALE RESTAURATION UND VERFAHREN ZUM BESTIMMEN EINER HÖHE EINES DENTALOBJEKTS IN EINEM WÄRMEBEHANDLUNGSOFEN**

(71) Anmelder: Ivoclar Vivadent AG, 9494 Schaan (LI)
(72) Erfinder: Cetin, Tarkan, 6800 Feldkirch (AT); Senti, Theresa, 9497 Triesenberg (LI)
(74) Vertreter: Baldus, Oliver

(57) **Zusammenfassung**

Die Erfindung betrifft ein einen Wärmebehandlungsofen (100) für ein Dentalobjekt (101), mit einer elektronischen Kamera (103) zum Erzeugen eines Bilddatensatzes (107) des Dentalobjektes (101) innerhalb eines Brennraums (123); und einer Auswertungseinrichtung (105) zum Ermitteln einer Höhe und/oder geometrischen Abmessung des Dentalobjektes (101) auf Basis des Bilddatensatzes (107).

## Beschreibung

Die vorliegende Erfindung betrifft einen Wärmebehandlungsofen für ein Dentalobjekt und ein Verfahren zum Bestimmen einer Höhe eines Dentalobjektes in einem Wärmebehandlungsofen.

Bisher kann die Höhe von dentalen Dentalobjekten in dentalen Wärmebehandlungsöfen nur im warmen Zustand und mittels einer Infrarotkamera ermittelt werden. Zudem sind die Dentalobjekte auf Muffeln oder dentale Restaurationen eingeschränkt.

Die Größe von Dentalobjekten bestimmt den Arbeitsbereich für die Infrarotkamera. Demnach kann die Information über die Größe derQ Dentalobjekte schon beim Einstellen in den Ofen interessant sein, bevor diese erst eine gewisse Temperatur erreichen, um von der Infrarotkamera gesehen zu werden. Sind zu viele Dentalobjekte im Wärmebehandlungsofen angeordnet, verdecken sich diese.

Es ist die technische Aufgabe der vorliegenden Erfindung, die Höhe eines Dentalobjektes innerhalb eines Wärmebehandlungsofens zu erfassen.

Diese Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird diese technische Aufgabe durch einen Wärmebehandlungsofen für ein Dentalobjekt gelöst, mit einer elektronischen Kamera zum Erzeugen eines Bilddatensatzes des Dentalobjektes innerhalb eines Brennraums; und einer Auswertungseinrichtung zum Ermitteln einer Höhe und/oder geometrischen Abmessung des Dentalobjektes auf Basis des Bilddatensatzes. Durch die elektronische Bildkamera als bildgebenden Sensor ist eine wärmeunabhängige Ermittlung der Höhe des Dentalobjektes in dem Wärmebehandlungsofen möglich. Der Wärmebehandlungsofen kann auch mehrere Kameras umfassen.

In einer technisch vorteilhaften Ausführungsform des Wärmebehandlungsofens ist die elektronische Kamera derart angeordnet, dass das Dentalobjekt seitlich aufnehmbar ist oder die Dentalobjekte seitlich aufnehmbar sind. Dadurch wird beispielsweise der technische Vorteil erreicht, dass die Höhe des Dentalobjekts mit hoher Genauigkeit bestimmt werden kann.

In einer weiteren technisch vorteilhaften Ausführungsform des Wärmebehandlungsofens ist die elektronische Kamera eine RGB-Kamera, eine Schwarz-Weiß-Kamera oder eine Infrarot-Kamera. Dadurch wird beispielsweise der technische Vorteil erreicht, dass besonders geeignete Kameras zur Erzeugung des Bilddatensatzes verwendet werden.

In einer weiteren technisch vorteilhaften Ausführungsform des Wärmebehandlungsofens ist die elektronische Kamera statisch angeordnet. Dadurch wird beispielsweise der technische Vorteil erreicht, dass ein einfacher Aufbau des Wärmebehandlungsofens erreicht wird.

In einer weiteren technisch vorteilhaften Ausführungsform des Wärmebehandlungsofens ist die Kamera in einem beweglichen Ofenkopf angeordnet und/oder die Kamera drehbar am Ofenkopf angeordnet. Eine weitere Möglichkeit ist, dass die Kamera am Ofenkopf rotieren kann oder die Kameraposition auf einer Höhe variabel ist. Dadurch wird beispielsweise der technische Vorteil erreicht, dass das Dentalobjekt auf einfache Weise von unterschiedlichen Positionen vermessen werden kann.

In einer weiteren technisch vorteilhaften Ausführungsform des Wärmebehandlungsofens umfasst der Wärmebehandlungsofen eine Infrarot-Lampe, die derart angeordnet ist, dass diese einen Wärmevorhang hinter dem Dentalobjekt erzeugt. Dadurch wird beispielsweise der technische Vorteil erreicht, dass die dentalen Objekte für kühler bleiben als der Hintergrund und so die Infrarot-Kamera die dentalen Objekte mit hoher Schärfe sehen kann.

In einer weiteren technisch vorteilhaften Ausführungsform des Wärmebehandlungsofens umfasst der Wärmebehandlungsofen eine Positionserfassungsvorrichtung zum Erfassen einer Position des Ofenkopfes. Dadurch wird beispielsweise der technische Vorteil erreicht, dass der Bildausschnitt durch die Positionierung der Kamera am beweglichen Ofenkopf verändert werden kann.

In einer weiteren technisch vorteilhaften Ausführungsform des Wärmebehandlungsofens ist die Positionserfassungsvorrichtung ausgebildet, einen Öffnungswinkel des Ofenkopfes zu bestimmen. Dadurch wird beispielsweise der technische Vorteil erreicht, dass die Höhe des Dentalobjektes mit hoher Genauigkeit berechnet werden kann.

In einer weiteren technisch vorteilhaften Ausführungsform des Wärmebehandlungsofens umfasst der Wärmebehandlungsofen eine Lichtquelle zum Beleuchten des Dentalobjektes. Dadurch wird beispielsweise der technische Vorteil erreicht, dass der Bilddatensatz mit einer hohen Bildqualität erzeugt werden kann.

In einer weiteren technisch vorteilhaften Ausführungsform des Wärmebehandlungsofens ist die Auswertungseinrichtung ausgebildet, ein Volumen, eine Masse, ein Material und/oder eine Größe des Dentalobjektes auf Basis des Bilddatensatzes zu bestimmen. Dadurch wird beispielsweise der technische Vorteil erreicht, dass eine vollständige Geometriemessung des Dentalobjekts in dem dentalen Wärmebehandlungsofen durchgeführt werden kann.

In einer weiteren technisch vorteilhaften Ausführungsform des Wärmebehandlungsofens umfasst der Wärmebehandlungsofen ein Raster mit Linien zum Bestimmen der Höhe des Dentalobjektes. Dadurch wird beispielsweise der technische Vorteil erreicht, dass durch das definierte Raster die Höhe, die Zone und die Position des Dentalobjektes mit hoher Genauigkeit bestimmt werden kann.

In einer weiteren technisch vorteilhaften Ausführungsform des Wärmebehandlungsofens ist die Auswertungseinrichtung ausgebildet, ein virtuelles Raster in den Bilddatensatz zu integrieren. Dadurch wird beispielsweise der technische Vorteil erreicht, dass das Dentalobjekt mit unterschiedlichen Rastern vermessen werden kann.

Gemäß einem zweiten Aspekt wird diese technische Aufgabe durch ein Verfahren zum Bestimmen einer Höhe eines Dentalobjektes in einem Wärmebehandlungsofen gelöst, mit den Schritten eines Erzeugens eines Bilddatensatzes des Dentalobjektes innerhalb eines Brennraums mit einer elektronischen Kamera; und eines Ermittelns einer Höhe und/oder geometrischen Abmessung des Dentalobjektes auf Basis des Bilddatensatzes. Durch das Verfahren werden die gleichen technischem Vorteile wie durch den Wärmebehandlungsofen gelöst.

In einer technisch vorteilhaften Ausführungsform des Verfahrens wird ein Öffnungswinkel eines Ofenkopfes erfasst, in dem die Kamera angeordnet ist oder ein Raster des Wärmebehandlungsofens erfasst. Dadurch wird beispielsweise ebenfalls der technische Vorteil erreicht, dass die Höhe des Dentalobjektes mit hoher Genauigkeit berechnet werden kann.

In einer weiteren technisch vorteilhaften Ausführungsform des Verfahrens wird das Dentalobjekt durch eine Lichtquelle beleuchtet. Dadurch wird beispielsweise ebenfalls der technische Vorteil erreicht, dass der Bilddatensatz mit einer hohen Bildqualität erzeugt werden kann.

Ausführungsbeispiele der Erfindung sind in den Zeichnungen dargestellt und werden im Folgenden näher beschrieben.

Es zeigen:
- Fig. 1: eine schematische Ansicht eines Wärmebehandlungsofen für ein Dentalobjekt;
- Fig. 2: eine weitere schematische Ansicht eines Wärmebehandlungsofen für ein Dentalobjekt;
- Fig. 3: eine schematische Ansicht von Verfahrensschritten bei der Geometriemessung von Dentalobjekten; und
- Fig. 4: ein Blockdiagramm eines Verfahrens zum Bestimmen einer Höhe eines Dentalobjektes in einem Wärmebehandlungsofen.

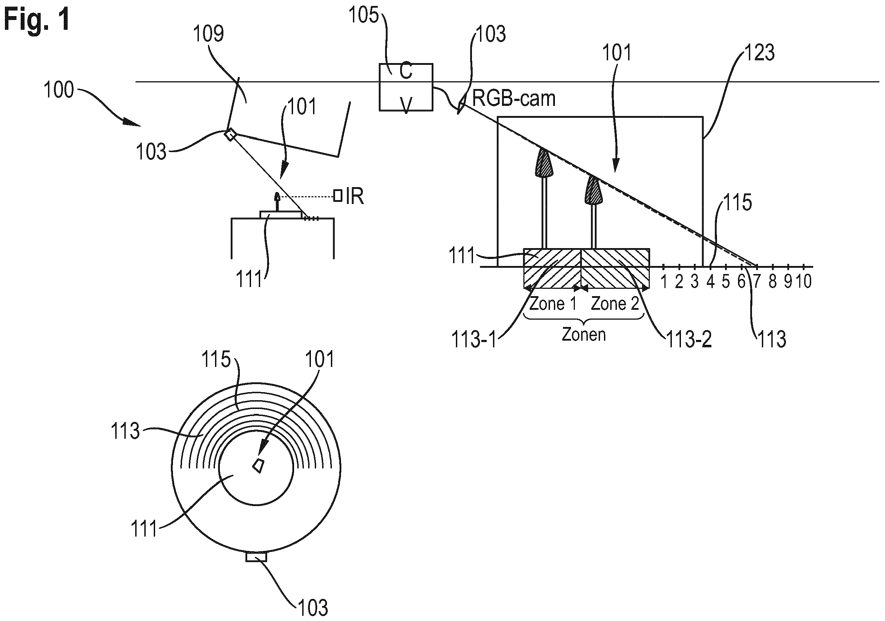

Fig. 1 zeigt eine schematische Ansicht eines Wärmebehandlungsofen 100 für ein Dentalobjekt 101. Der Wärmebehandlungsofen 100 umfasst eine elektronische Kamera 103 zum Erzeugen eines digitalen Bilddatensatzes 107 des Dentalobjektes 101 innerhalb eines Brennraums 123. Das Dentalobjekt 101 für die Wärmebehandlung ist beispielsweise eine Krone, eine Brücke, ein Veneer, ein Abutment, ein Inlay, ein Onlay, eine Schiene oder eine Teil- oder Vollprothese. Das Dentalobjekt 101 wird innerhalb des Wärmebehandlungsofens 100 im Brennraum 123 angeordnet und zur Wärmebehandlung erhitzt, wie beispielsweise bei einem Brennen oder Tempern des Dentalobjektes 101. Zu diesem Zweck umfasst der Wärmebehandlungsofen 100 eine elektrische Heizeinrichtung, die das Dentalobjekt 101 im Brennraum 123 erwärmt. Die Temperatur ist hierbei von einem Benutzer einstellbar.

Das Dentalobjekt 101 ist auf einer Brennfläche 111 als Brenngutträger angeordnet, die durch eine Siliziumcarbid-Scheibe, einen Silizium-Nitrit-Brenngutträger oder einen Wabenträger gebildet ist. Die elektronische Kamera 103 ist schräg oberhalb des Dentalobjektes 101 innerhalb eines aufklappbaren Ofenkopfes 109 angeordnet.

Eine Auswertungseinrichtung 105 dient zum Ermitteln einer Höhe des Dentalobjektes 101 auf Basis des Bilddatensatzes 107. Zu diesem Zweck umfasst die Auswertungseinrichtung 105 einen Prozessor, mit dem der Bilddatensatz verarbeitet und analysiert werden kann und einen digitalen Speicher, in dem der Bilddatensatz und Programme abgelegt sind.

Der Prozessor kann ein Hardwaresystem, ein Mechanismus oder eine Komponente sein, die Daten, Signale oder andere Informationen verarbeitet. Ferner kann der Prozessor ein System mit einer zentralen Verarbeitungseinheit, mehreren Verarbeitungseinheiten, dedizierten Schaltkreisen zur Erzielung von Funktionalität oder andere Systeme umfassen.

Die Verarbeitung oder Analyse durch den Prozessor ist nicht auf eine räumliche Lage oder zeitlich beschränkt. Beispielsweise kann der Prozessor seine Funktionen in Echtzeit, offline oder in einem sogenannten "Batch-Modus" ausführen.

Es können auch mehrere Prozessoren vorgesehen sein. Teile der Verarbeitung oder Analyse können dann zu unterschiedlichen Zeiten und an unterschiedlichen Orten von verschiedenen oder den gleichen Prozessoren durchgeführt werden.

Beispielhafte Computerchips, welche als digitaler Speicher verwendet werden können, können EEPROM-Chips (Electrically Erasable Programmable Read-Only Memory) sein. Für die Verarbeitung oder Analyse eines auf einem digitalen Speicher gespeicherten Bilddatensatzes durch die Prozessoren können Programme verwendet werden, die ebenso auf einem digitalen Speicher gespeichert sind. Durch die Prozessoren werden geeignete Anweisungen oder Programme ausgeführt, die sich auf einem nichtflüchtigen computerlesbaren Medium, auf Hardware-Schaltkreisen oder einer beliebigen Kombination daraus befinden können. Die Anweisungen können auch von einer oder mehreren Servermaschinen übersetzt werden.

Für die Verarbeitung oder Analyse des Bilddatensatzes durch die Prozessoren kann auch eine Steuerlogik in Software, Hardware oder einer Kombination aus beidem implementiert sein. Die Steuerlogik kann in einem Informationsspeichermedium, beispielsweise einem computerlesbaren Medium, als eine Vielzahl von Anweisungen gespeichert sein. Derartige Anweisungen sind dafür ausgelegt, ein Informationsverarbeitungsgerät anzuweisen, eine Abfolge von Arbeitsschritten auszuführen.

Mittels der Kamera 103 kann das Dentalobjekt 101 auf der Brennfläche 111 in mehrere Zonen 113-1 und 113-2 eingeteilt werden, wie beispielsweise eine vordere und eine hintere Zone. Im Allgemeinen ist die Anzahl der Zonen beliebig. Die Einteilung in die Zonen 113-1 und 113-2 geschieht durch eine Transformation der Ansicht auf das Dentalobjekt 101 in einer Aufsicht. Dazu wird die Kamera 103 in der Position und dem Sichtbereich kalibriert, die an festen Punkten als Eingangsparameter erfasst werden und die die Transformation initiieren.

Die variable Position oder Höhe der Kamera 103 und die Entfernung der Kamera 103 zur Mitte der Brennfläche 111 ist bekannt. Dadurch ist auch das Sichtfeld und die Blickrichtung der Kamera 103 auf das Dentalobjekt 101 bekannt. Da die Position und Höhe der Kamera 103 bekannt ist, kann die Höhe des Dentalobjektes 101 aus dem Bilddatensatz berechnet werden.

Das von der Kamera 103 abgebildete Dentalobjekt 101 verdeckt oder berührt einen Bereich 113 hinter dem Dentalobjekt 101. Dieser Bereich 113 umfasst beispielsweise ein Raster oder Linien 115, die in regelmäßigen Abständen auf der Brennfläche angeordnet sind. Das Raster oder die Linien 115 können auch als virtuelles Overlay über dem Kamerabild abgebildet werden und in den Bilddatensatz integriert werden. Dieses virtuelle Raster oder die Linien 115 werden durch einen Bildverarbeitungsalgorithmus erstellt und über das Bild des Dentalobjekt 101 der Kamera 103 gelegt, um die Höhe des Dentalobjektes 101 zu bestimmen.

Das Raster oder die Linien 115 können als Lineal für die Ofengeometrie zum Bestimmen der Höhe des Dentalobjektes 101 verwendet werden. Der Bildverarbeitungsalgorithmus kann die Höhe, Größe und Orientierung des Dentalobjektes 101 durch die Kamera 103 als bildgebenden Sensor und das vorgegebene Raster bestimmen.

Durch den Bildverarbeitungsalgorithmus können zudem auch andere Eigenschaften des Dentalobjekts 101 bestimmt und in akustische oder visuelle Bediensignale für einen Bediener umgewandelt werden. Je nachdem, wo sich das Dentalobjekt 100 auf der Brennfläche 111 befindet und welche Linien des Rasters 115 von dem Dentalobjekt 101 auf bildlicher Ebene berührt werden, kann die Höhe des Dentalobjekts 101 bestimmt werden.

Der Ofenkopf 109 kann eine Infrarot-Lampe umfassen, die eine kurze Zeit auf die Brennfläche herunterstrahlt und einen Wärmevorhang hinter dem Dentalobjekt 101 erzeugt. Dadurch bleibt das Dentalobjekt 101 für eine Zeitspanne etwas kühler. Eine Infrarot-Kamera 103 kann das Dentalobjekt 101 mit scharfen Konturen erfassen und den so gewonnenen Bilddatensatz für weitere Schritte zwischenspeichern.

Durch den Wärmebehandlungsofen 100 wird eine gute Belichtung der Dentalobjekte 101 und eine schnelle Ermittlung der Objekthöhen erzielt. Es werden bessere Brennergebnisse durch bessere Einstellung des Arbeitsbereichs für die Infrarotkamera erhalten. Zudem lassen sich zu hohe Brenngutträger ermitteln, so dass ein Signal ausgeben werden kann, wenn die Dentalobjekte 101 für den Wärmebehandlungsofen 100 zu hoch oder zu klein sind. Daher können die Dentalobjekte 101 vollständig von der Infrarotkamera erfasst und optimale Ergebnisse erzielt werden.

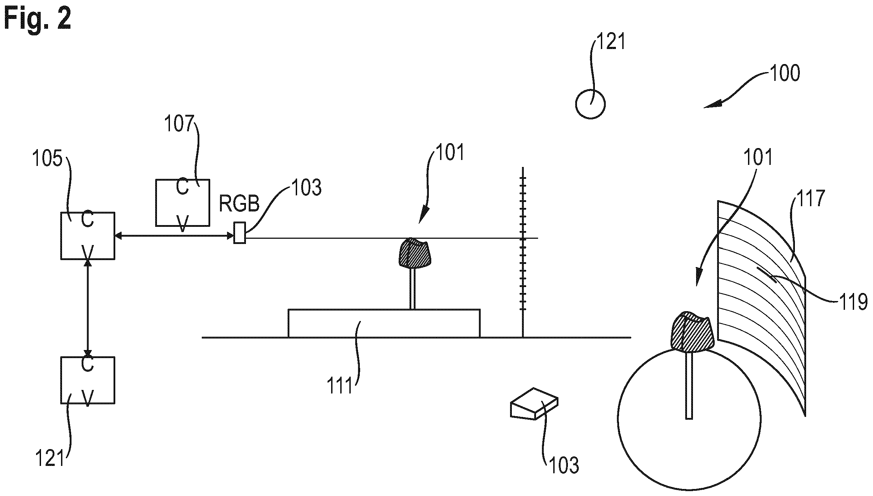

Fig. 2 zeigt eine weitere schematische Ansicht des Wärmebehandlungsofens 100 für das Dentalobjekt 101. Die Höhe des Dentalobjekts 101 wird durch die tiefer gelegene elektronische Kamera 103 ermittelt. Dabei wird über das aufgenommene Bild virtuell ein Raster 115 gelegt. Das Dentalobjekt 101 ist hinter oder vor einer Wand 117 mit Linien 115 in bestimmten Abständen angeordnet. Die Höhe des Dentalobjekte 101 wird durch die bekannte Geometrie des Wärmebehandlungsofen 100 ermittelt.

Bei ungünstigen Lichtverhältnissen, wird ein LED-Lichtarray oder eine LED-Lampe um die Kamera 103 als Lichtquelle 121 zugeschaltet. Durch das Zuschalten eines LED-Blitzes als Lichtquelle 121 können zusätzlich Schatten des Dentalobjekts 101 analysiert werden, so dass auf Basis dieser Information die Höhe des Dentalobjektes 101 bestimmt werden kann. Beispielsweise kann eine Länge eines Schattens in eine Höhe des Dentalobjektes 101 umgerechnet werden.

Der Wärmebehandlungsofen 100 kann eine Positionserfassungsvorrichtung 119 zum Erfassen einer Position des Ofenkopfes 107 umfasst. Zu diesem Zweck kann die Positionserfassungsvorrichtung 119 beispielsweise einen Öffnungswinkel des Ofenkopfes 109 erfassen. Der Öffnungswinkel kann als digitaler Wert an die Auswertungseinrichtung 105 übermittelt werden. Die Auswertungseinrichtung 105 kann dann auf Basis des Öffnungswinkels die Position der elektronischen Kamera 105 berechnen, die im Ofenkopf 109 angeordnet ist.

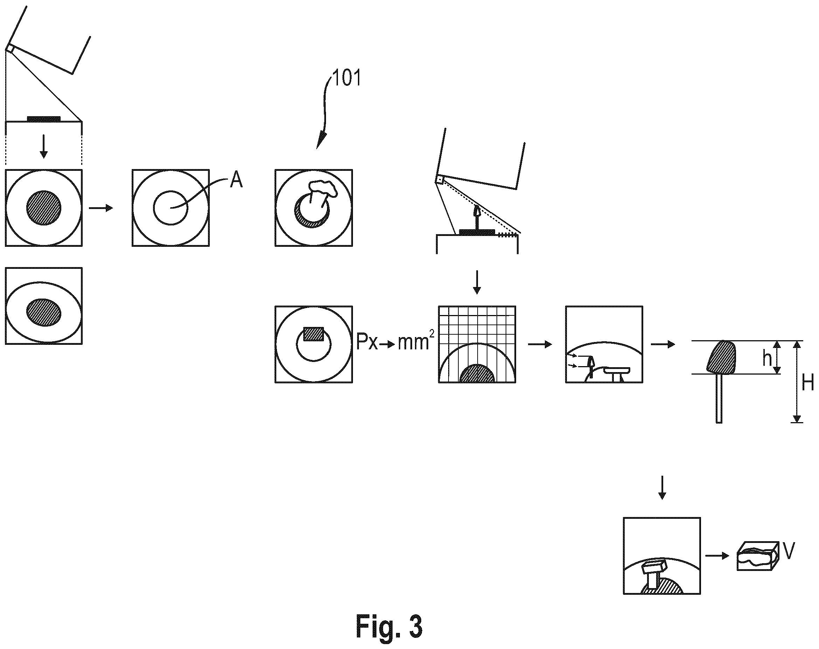

Fig. 3 zeigt eine schematische Ansicht von Verfahrensschritten bei der Geometriemessung des Dentalobjekts 101. Durch die Positionierung der Kamera 103 am Ofenkopf 109 ist es möglich, den Bildausschnitt zu verändern. An der höchsten Position der Kamera 103, d.h. dem maximalen Öffnungswinke des Ofenkopfes 109, wird eine gute Aufsicht auf das Dentalobjekt 101 erhalten (1).

Durch diese Aufsicht ist es möglich, gleichmäßige Formen zu erkennen, wie beispielsweise ein kreisförmiges oder quadratisches weißes Dämmmaterial oder die kreisförmige schwarze Scheibe der Brennfläche 111 (4). Mithilfe des Bildverarbeitungsalgorithmus kann die Siliziumcarbid-Scheibe und das Dämmmaterial digital getrennt und einzeln betrachtet werden, wie beispielsweise durch digitale Farbfilter (3).

Nach dem digitalen Trennen können durch einen Kantenerfassungsalgorithmus (Edge-Detection-Algorithmus) die Umrisse des Dentalobjektes 101 erfasst werden, die dann in den folgenden Schritten als Referenzpunkt für weitere Berechnungen dienen. Das eigentliche kreisrunde Dentalobjekt 101, der Siliziumcarbid-Scheibe oder der Brenngutträger 111 wird durch die schräg oben angesetzte Kamera 103 leicht verzerrt, so dass Ellipsen entstehen (4). Diese Ellipsen werden mittels perspektivischer Transformation des Bildes in Kreise transformiert (2).

Dadurch werden die Siliziumcarbid-Scheibe und das Dentalobjekt 101, das auf dieser angeordnet ist, korrekt angezeigt. Durch das Stapeln mehrerer Dentalobjekte 101 in die Höhe werden diese durch die Transformation leicht verzerrt (5). Bei einer hohen Position der Kamera 103 ist die Verzerrungsfehler jedoch vernachlässigbar.

Da die Fläche der Siliziumcarbid--Scheibe bekannt ist, kann eine Umrechnung der Bildpunkte (Pixel) in eine Fläche (mm²) erfolgen (6). Die Anzahl der Bildpunkte in dem Bilddatensatz 107 hängt von der Kamera 103 und dem betrachteten Bildausschnitt ab. Diese wird individuell mittels Bildverarbeitungsalgorithmen bestimmt.

Beispielsweise wird die Auflösung des Bilddatensatzes 107 der Kamera 103 auf eine Größe von 400 x 400 Bildpunkten festgesetzt. Durch diese Festlegung ist es möglich, aus der Fläche des erfassten Dentalobjekts 101 im Bilddatensatz 107 die reale Größe des Dentalobjekts 101 zu berechnen. Ein Bildverarbeitungsalgorithmus bestimmt die Fläche von erkannten Umrissen des Dentalobjektes 101 automatisch und gibt diese Fläche in der Anzahl der Bildpunkte zurück. Da jedem Bildpunkt eine vorgegebene Fläche zugeordnet werden kann, kann eine Gesamtfläche des Dentalobjekt 101 bestimmt werden.

Zudem kann über das Herunterfahren des Ofenkopfes 109 ein anderes, frontaleres Bild auf das Dentalobjekt 101 und die Brennfläche erzeugt werden (7). Mithilfe eines über das Bild gelegten virtuellen Rasters kann ermittelt werden, welche Linie des Rasters von dem angeordneten Dentalobjekt 101 im Bilddatensatz 101 berührt wird (8). Da das Raster geometrisch genau auf den Wärmebehandlungsofen 100 abgestimmt und in Zonen eingeteilt ist, kann die Höhe des Dentalobjektes 101 einschließlich der Pins ermittelt werden (9) und (10).

Mithilfe der Information über die Fläche von oben und der Höhe von der Seite kann ein Volumen (Cubus) des Dentalobjektes 101 berechnet werden (11). Über die Information über das Material des Dentalobjektes 101, die beispielsweise durch einen angelernten und selbstlernenden Algorithmus (Machine-Learning-Algorithmus) erhalten wird, kann die Masse berechnet werden.

Bei vollständig geöffnetem Ofenkopf 107 kann die Erkennung und Flächenberechnung des Dentalobjekts 101 von oben erfolgen. Wird der Ofenkopf 107 auf halbe Position gefahren, sodass die Lichtverhältnisse noch gut sind, kann die Höhe des Dentalobjekts 101 zusätzlich seitlich erfasst werden.

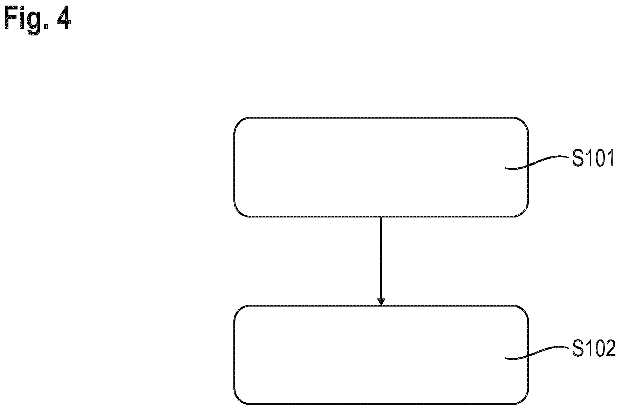

Fig. 4 zeigt ein Blockdiagramm eines Verfahrens zum Bestimmen der Höhe des Dentalobjektes 101 in dem Wärmebehandlungsofen 100. In Schritt S101 wird der Bilddatensatz 107 des Dentalobjektes 101 innerhalb des Brennraums 123 mit einer elektronischen Kamera 103 erstellt. In Schritt S102 wird die Höhe des Dentalobjektes 101 auf Basis des Bilddatensatzes 107 ermittelt.

Mit der Höheninformation des Dentalobjekts 101 kann über weitere digitale Bildverarbeitungsalgorithmen ein genaueres Profil über die individuellen Eigenschaften des Dentalobjekts erstellt werden, wie beispielsweise ein Volumen, eine Masse, ein Material und eine Größe. Die Höhe dient hier als zusätzliche Information, um die Zuordnung des Dentalobjektes 101 zu verschiedenen Patienten zuverlässiger zu machen und über weitere Verarbeitungsschritte hinweg zu verfolgen. Die Objektinformation kann auch dazu verwendet werden, ein Temperaturprofil des Dentalobjektes 101 zu optimieren.

Durch die erfasste Höhe des Dentalobjektes 101 kann zudem festgestellt werden, ob mehrere Träger gestapelt worden sind. Gestapelte Träger bringen mehr Masse in den Brennraum 123 des Wärmebehandlungsofens 100 und verändern ein Thermomanagement dementsprechend. Außerdem kann das Dentalobjekt 101 über das von der Infrarotkamera erfasste Bild herausragen und somit von der Infrarotkamera nicht mehr erfasst werden.

Durch die Information zu der Größe und Höhe des Dentalobjektes kann die richtige Positionierung des Elements für eine automatische Temperaturkalibrierung ermittelt werden. Das Element für die automatische Temperaturkalibrierung wird für die Kalibrierung verwendet und kann richtig platziert und eingesteckt werden.

Wird beispielsweise erfasst, dass das Element für die automatische Temperaturkalibrierung zu hoch angeordnet ist, kann eine Warnung ausgegeben werden und das Element für die automatische Temperaturkalibrierung bis zum Anschlag eingesteckt werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Wärmebehandlungsofen
- 101: Dentalobjekt
- 103: elektronische Kamera
- 105: Auswertungseinrichtung
- 107: Bilddatensatz
- 109: Ofenkopf
- 111: Brennfläche
- 113: Zone
- 115: Raster
- 117: Wand
- 119: Positionserfassungsvorrichtung
- 121: Lichtquelle
- 123: Brennraum

## Patentansprüche

1. Wärmebehandlungsofen (100) für ein Dentalobjekt (101), mit:
- einer elektronischen Kamera (103) zum Erzeugen eines Bilddatensatzes (107) des Dentalobjektes (101) innerhalb eines Brennraums (123); und
- einer Auswertungseinrichtung (105) zum Ermitteln einer Höhe und/oder geometrischen Abmessung des Dentalobjektes (101) auf Basis des Bilddatensatzes (107).

2. Wärmebehandlungsofen (100) nach Anspruch 1, wobei die elektronische Kamera (103) derart angeordnet ist, dass das Dentalobjekt (101) seitlich aufnehmbar ist oder die Dentalobjekte seitlich aufnehmbar sind.

3. Wärmebehandlungsofen (100) nach einem der vorangehenden Ansprüche, wobei die elektronische Kamera (103) eine RGB-Kamera, eine Schwarz-Weiß-Kamera oder eine Infrarot-Kamera ist.

4. Wärmebehandlungsofen (100) nach einem der vorangehenden Ansprüche, wobei die elektronische Kamera (103) statisch angeordnet ist.

5. Wärmebehandlungsofen (100) nach einem der vorangehenden Ansprüche, wobei die elektronische Kamera (103) in einem beweglichen Ofenkopf (107) angeordnet ist und/oder die Kamera (103) drehbar am Ofenkopf (109) angeordnet ist.

6. Wärmebehandlungsofen (100) nach Anspruch 5, wobei der Wärmebehandlungsofen (100) eine Infrarot-Lampe umfasst, die derart angeordnet ist, dass diese einen Wärmevorhang hinter dem Dentalobjekt (101) erzeugt.

7. Wärmebehandlungsofen (100) nach Anspruch 5 oder 6, wobei der Wärmebehandlungsofen (100) eine Positionserfassungsvorrichtung (119) zum Erfassen einer Position des Ofenkopfes (107) umfasst.

8. Wärmebehandlungsofen (100) nach Anspruch 7, wobei die Positionserfassungsvorrichtung (119) ausgebildet ist, einen Öffnungswinkel des Ofenkopfes (109) zu bestimmen.

9. Wärmebehandlungsofen (100) nach einem der vorangehenden Ansprüche, wobei der Wärmebehandlungsofen (100) eine Lichtquelle (121) zum Beleuchten des Dentalobjektes (101) umfasst.

10. Wärmebehandlungsofen nach einem der vorangehenden Ansprüche, wobei die Auswertungseinrichtung (105) ausgebildet ist, ein Volumen, eine Masse, ein Material und/oder eine Größe des Dentalobjektes (101) auf Basis des Bilddatensatzes (107) zu bestimmen.

11. Wärmebehandlungsofen nach einem der vorangehenden Ansprüche, wobei der Wärmebehandlungsofen ein Raster (115) mit Linien zum Bestimmen der Höhe des Dentalobjektes (101) umfasst.

12. Wärmebehandlungsofen nach einem der vorangehenden Ansprüche, wobei die Auswertungseinrichtung (105) ausgebildet ist, ein virtuelles Raster (115) in den Bilddatensatz (107) zu integrieren.

13. Verfahren zum Bestimmen einer Höhe eines Dentalobjektes (101) in einem Wärmebehandlungsofen (100), mit den Schritten:
- Erzeugen (S101) eines Bilddatensatzes (107) des Dentalobjektes (101) innerhalb eines Brennraums (123) mit einer elektronischen Kamera (103); und
- Ermitteln (S102) einer Höhe und/oder geometrischen Abmessung des Dentalobjektes (101) auf Basis des Bilddatensatzes (107).

14. Verfahren nach Anspruch 13, wobei ein Öffnungswinkel eines Ofenkopfes (109) erfasst wird, in dem die Kamera (103) angeordnet ist oder ein Raster des Wärmebehandlungsofens erfasst wird.

15. Verfahren nach Anspruch 13 oder 14, wobei das Dentalobjekt (101) durch eine Lichtquelle beleuchtet wird.
